Europäisches Patentamt

European Patent Office (11) Numéro de publication: **0 012 692**
**B1**
Office européen des brevets

(19)

(12) **FASCICULE DE BREVET EUROPEEN**

(45) Date de publication du fascicule de brevet:
18.03.81

(51) Int. Cl.³: **F 24 J 3/02**

(21) Numéro de dépôt: **79401006.6**

(22) Date de dépôt: **11.12.79**

(54) **Elément de transfert de l'énergie solaire destiné à être introduit à l'intérieur d'une enveloppe de capteur solaire, et capteur solaire ainsi équipé.**

(30) Priorité: **12.12.78 FR 7834878**

(43) Date de publication de la demande:
**25.06.80 Bulletin 80/13**

(45) Mention de la délivrance du brevet:
**18.03.81 Bulletin 81/11**

(84) Etats contractants désignés:
**DE FR GB IT NL**

(56) Documents cités:
**FR-A-2 312 743**
**FR-A-2 345 678**

(73) Titulaire: **COMPAGNIE DES LAMPES, 29, rue de Lisbonne, F-75008 Paris (FR)**

(72) Inventeur: **Scoarnec, Louis, "THOMSON-CSF" - SCPI 173, bld Haussmann, F-75360 Paris Cedex 08 (FR)**
Inventeur: **Herbert, Patrick, "THOMSON-CSF" - SCPI 173, bld Haussmann, F-75360 Paris Cedex 08 (FR)**

(74) Mandataire: **Dubreuil, Annie et al, "THOMSON-CSF" - SCPI 173, bld Haussmann, F-75360 Paris Cedex 08 (FR)**

## Elément de transfert de l'énergie solaire destiné à être introduit à l'intérieur d'une enveloppe de capteur solaire, et capteur solaire ainsi équipé

La présente invention concerne un élément de transfert de l'énergie solaire plus particulièrement au moyen d'un fluide caloporteur, cet élément étant destiné à être introduit à l'intérieur de l'enveloppe d'un capteur solaire. Elle concerne également les capteurs de ce type, équipés de ces éléments.

Pour obtenir un bon transfert des calories entre la paroi intérieure d'une enveloppe de capteur solaire et le fluide calaporteur, il convient d'assurer entre les deux une bonne conduction thermique. Celle-ci peut être obtenue, par exemple, au moyen d'un élément intermédiaire, bon conducteur de la chaleur, en contact intime, d'une part avec l'enveloppe, d'autre part avec le tube dans lequel circule le fluide caloporteur. C'est une solution souvent coûteuse et difficile à mettre en œuvre d'un point de vue technologique. Cette bonne conduction peut également être obtenue grâce à un agencement du ou des tubes à l'intérieur de l'enveloppe tel que l'élément qui y est introduit, occupe le maximum du volume libre, ne laissant subsister entre la paroi de l'enveloppe et le tube lui-même qu'une couche d'air suffisamment mince pour qu'il soit possible d'utiliser les propriétés conductrices de l'air.

La présente invention concerne précisément un élément de transfert de l'énergie solaire destiné à être introduit à l'intérieur d'une enveloppe de capteur solaire dont l'agencement conduit à l'obtention de ce résultat. Elle concerne précisément un tel élément de transfert de l'énergie solaire par fluide caloporteur destiné à être introduit dans la partie creuse d'une enveloppe de capteur solaire ayant une section SV et à être raccordé en amont et en aval de cette enveloppe à un circuit général du fluide caloporteur, caractérisé en ce qu'il comprend un premier tube de section S1 destiné à être placé à l'intérieur de cette partie creuse, et, d'une part, un second tube de section S2 raccordé, en amont, au circuit général du fluide caloporteur, plongeant lui-même à l'intérieur de ce premier tube, un bouchon de raccordement creux obturant l'extrémité du premier tube et permettant la circulation du fluide caloporteur entre l'intérieur du second tube et la section libre (S1 − S2) de l'espace intermédiaire entre les premier et second tubes et, d'autre part, un troisième tube destiné à assurer la circulation de fluide en aval de l'élément depuis cette section libre (S1 − S2) jusqu'au circuit général de circulation du fluide; les second et troisième tubes présentant chacun une zone aplatie, sur une longueur $1_1$ déterminée, telles que lorsque ces deux tubes sont introduits dans le premier, leurs zones aplaties se trouvent accolées pour être rendues solidaires l'une de l'autre ainsi que solidaires de ce premier tube à son extrémité opposée à l'extrémité obturée par le bouchon.

L'invention sera mieux comprise à l'aide des applications qui vont suivre et des figures jointes parmi lesquelles:

— La figure 1 et les figures 2 et 3 (vues en coupe de la figure 1) représentent schématiquement un élément conforme l'invention;

— La figure 4 est un exemple de réalisation d'un capteur solaire dans lequel un élément selon la figure 1 est introduit.

Pour plus de clarté, les mêmes éléments portent les mêmes références dans toutes les figures.

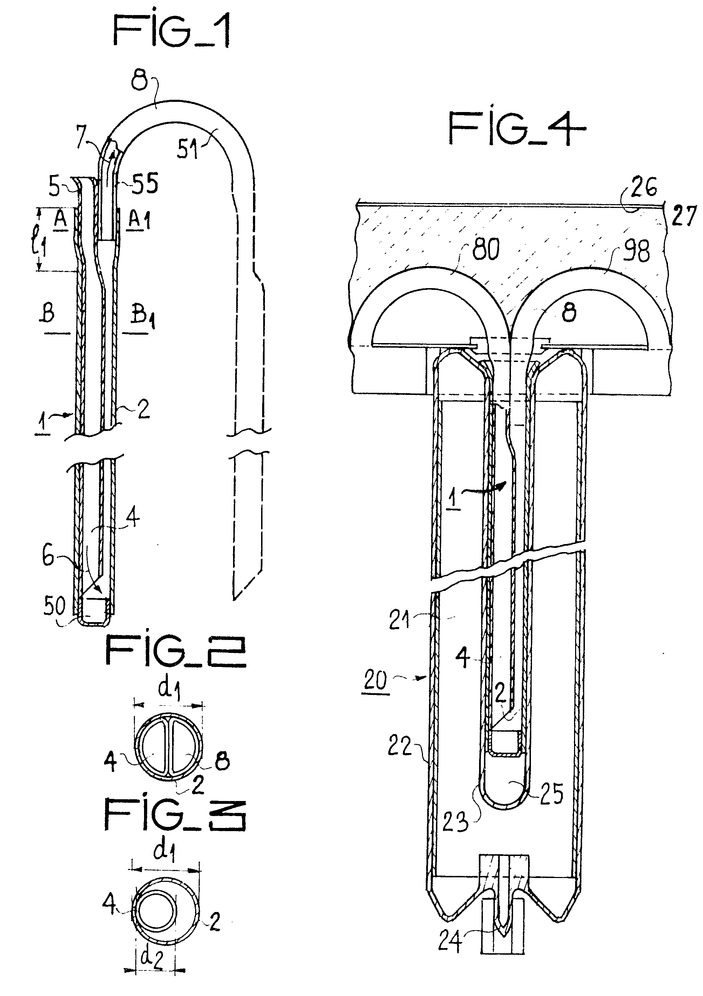

Comme le montrent la figure 1, et les figures 2 et 3 qui sont des coupes respectivement faites aux niveaux $AA_1$, et $BB_1$ de la figure 1, un élément 1 conforme à l'invention est constitué par un premier tube 2 réalisé en un matériau bon conducteur de la chaleur et présentant une section S1 circulaire sur toute sa longueur, destiné à être placé dans la partie creuse d'une enveloppe d'un capteur solaire non représentée sur cette figure. Le diamètre $d_1$ de ce tube est voisin du diamètre de cette partie creuse de telle sorte que la section S1 du premier tube et la section SV de cette partie creuse étant sensiblement les mêmes, il ne subsistera après introduction de l'élément dans l'enveloppe, qu'une couche d'air d'épaisseur suffisamment faible pour que les propriétés de conduction thermique de cette mince couche d'air servent aux transfert des calories entre la paroi intérieure de l'enveloppe et le fluide caloporteur qui circule normalement à l'intérieur de l'élément 1. Ce dernier, en fait, constitue une partie du circuit général de circulation de ce fluide. Un second tube 4 est introduit à l'intérieur du premier tube 2. Il présente un diamètre d2 tel que sa section S2 conduise à un espace intermédiaire entre les premier et second tubes, cet espace ayant une section libre (S1 − S2), approximativement égale à S2 sur la presque totalité de la longueur du premier tube 2 plongeant dans l'enveloppe. Il présente, en revanche, une zone 5 aplatie sur une longueur $l_1$ à l'extrémité du premier tube 2. Un bouchon de raccordement creux 50 obture l'extrémité opposée du premier tube 2 tout en permettant au fluide caloporteur de circuler dans la section libre (S1 − S2). Cette circulation est schématisée par les flèches 6 et 7. Le fluide caloporteur après avoir circulé dans cette section libre (S1 − S2) est acheminé comme le montre la flèche 7 vers le circuit général de circulation du fluide au moyen d'un troisième tube 8 présentant une zone aplatie 55 comparable à la zone aplatie 5 du second tube 4 et contre laquelle, elle est accolée comme le montre la figure 2 qui est une coupe de la figure 1 faite selon $AA_1$. Cette zone aplatie 55 du troisième tube 8 se prolonge en aval de l'élément 1 par une zone cintrée 51 qui se prolonge à son tour dans un exemple non limitatif par une branche droite (représentée en pointillés) constituant un tube analogue au second tube 4 qui, à son tour, pourra être introduit dans un premier tube 2 lui-même placé dans une autre enveloppe d'un autre capteur. De même la zone aplatie 5 du second tube 4 se prolonge en amont de l'élément 1 pour être raccordée elle aussi au reste du circuit général de circulation du fluide.

La figure 4 représente schématiquement un exemple de réalisation d'un capteur solaire équipé d'un élément 1 conforme à l'invention. Ce capteur 20 est constitué d'une enveloppe 21 comportant deux parois 22 et 23 fermées, à l'intérieur desquelles un vide est réalisé, par exemple à travers un queusot 24 fermé ensuite hermétiquement selon les techniques classiques. Cette enveloppe 21 comporte une partie creuse 25 dans laquelle est introduit le dispositif 1 selon l'invention. Un caisson 26, rempli de matériau bon isolant thermique 27, calorifuge les zones 80 et 98. Le scellement des tubes (2, 4, 8) qui sont de préférence métalliques est réalisé par tout moyen normalement mis en œuvre dans la plomberie.

Comme cela a été dit précédemment les tubes formant le dispositif conforme à l'invention occupent la presque totalité de la section de la partie creuse 25 de l'enveloppe 21 du capteur 20. Il peut être intéressant, afin d'améliorer le transfert thermique entre la paroi intérieure 23 de cette enveloppe et le circuit du fluide caloporteur, d'utiliser un manchon en forme de doigt de gant (non représenté sur la figure) réalisé en tricot métallique pour entourer sur toute sa longueur le premier tube 2 placé dans la partie creuse 25 de l'enveloppe.

Le tricot métallique est constitué de fils en métal, bon conducteur thermique, de quelques dixièmes de millimètres de diamètre. Il est réalisé en mailles suffisamment lâches pour remplir par élasticité l'espace compris entre la paroi extérieur du premier tube 2 et la paroi intérieure 23 de l'enveloppe, créant ainsi un certain nombre de ponts thermiques également répartis qui améliorent les transferts thermiques.

Plusieurs capteurs ainsi équipés de dispositifs selon l'invention peuvent être groupés pour former des panneaux solaires.

## Revendications

1. Elément (1) de transfert de l'énergie solaire par fluide caloporteur destiné à être introduit dans la partie creuse (25) d'une enveloppe (21) de capteur solaire (20) ayant une section SV et à être raccordé en amont et en aval de cette enveloppe à un circuit général du fluide caloporteur, caractérisé en ce qu'il comprend un premier tube (12) de section S1 destiné à être placé à l'intérieur de cette partie creuse (25), et, d'une part, un second tube (4) de section S2 raccordé en amont au circuit général du fluide caloporteur, plongeant lui-même à l'intérieur de ce premier tube (2), un bouchon de raccordement creux (50) obturant l'extrémité du premier tube (2) et permettant la circulation du fluide caloporteur entre l'intérieur du second tube (4) et la section libre (S1 – S2) de l'espace intermédiaire entre les premier et second tubes et, d'autre part, un troisième tube (8) destiné à assurer la circulation de fluide en aval de l'élément, depuis cette section libre (S1 – S2) jusqu'au circuit général de circulation du fluide; les second et troisième tubes (4, 8) présentant chacun une zone aplatie (5, 55), sur une longueur l₁ déterminée, telle que, lorsque ces deux tubes (4, 8) sont introduits dans le premier (2), leurs zones aplaties (5, 55) se trouvent accolées pour être rendues solidaires l'une de l'autre ainsi que solidaires de ce premier tube à son extrémité opposée à l'extrémité obturée par le bouchon (50).

2. Elément de transfert de l'énergie solaire, selon la revendication 1, caractérisé en ce que la section S1 du premier tube (2) est voisine de la section SV de la partie creuse (25) de l'enveloppe (21) de telle sorte qu'il ne subsiste, entre ce tube et l'enveloppe, qu'une couche faible d'air.

3. Elément de transfert de l'énergie solaire selon l'une des revendications 1 et 2, caractérisé en ce qu'un manchon, réalisé en tricot métallique, est placé entre la paroi intérieure (23) de l'enveloppe (21) et le premier tube (2).

4. Capteur solaire, caractérisé en ce qu'il est équipé d'un élément de transfert, selon l'une des revendications précédentes.

## Patentansprüche

1. Element (1) zur Übertragung von Sonnenenergie durch ein Wärmeübertragungsfluid, das zum Einsetzen in den hohlen Teil (25) eines Mantels (21) eines Solarkollektors (20), der einen Querschnitt SV hat, und zum Anschluß stromaufwärts und stromabwärts von diesem Mantel an einen allgemeinen Wärmeübertragungsfluidkreis bestimmt ist, dadurch gekennzeichnet, daß es ein erstes Rohr (2) mit dem Querschnitt S1 aufweist, das zum Einsetzen in das Innere dieses hohlen Bereichs (25) bestimmt ist und einerseits ein zweites Rohr (4) mit dem Querschnitt S2, das stromaufwärts an den allgemeinen Wärmeübertragungsfluidkreislauf angeschlossen ist und selbst in das Innere dieses ersten Rohres (2) eintaucht, einen hohlen Anschlußstopfen (50), der das Ende des ersten Rohres (2) verschließt und den Kreislauf des Wärmeübertragungsfluids zwischen dem Inneren des zweiten Rohres (4) und dem freien Querschnitt (S1 – S2) des Zwischenraumes zwischen dem ersten und zweiten Rohr ermöglicht, und andererseits ein drittes Rohr (8), das zur Gewährleistung des Kreislaufs des Mediums stromabwärts vom Element von diesem freien Querschnitt (S1 – S2) bis zum allgemeinen Fluidkreislauf bestimmt ist, aufweist, wobei das zweite und dritte Rohr (4, 8) über eine bestimmte Länge l₁ eine abgeflachte Zone (5, 55) der Gestalt aufweisen, daß, wenn diese beiden Rohre (4, 8) in das erste Rohr (2) eingeführt sind, ihre abgeflachten Zonen (5, 55) aneinander liegen, so daß sie miteinander sowie mit dem ersten Rohr an dessen Ende, welches dem durch den Stopfen (50) verschlossenen Ende gegenüberliegt, fest verbunden sind.

2. Element zur Übertragung von Sonnenenergie nach Anspruch 1, dadurch gekennzeichnet, daß der Querschnitt S1 des ersten Rohres (2) nahe beim Querschnitt SV des hohlen Teils (25) des Mantels (21) liegt, so daß zwischen diesem Rohr und dem Mantel nur eine geringe Luftschicht vorhanden ist.

3. Element zur Übertragung von Sonnenenergie nach einem der Ansprüche 1 und 2, dadurch gekennzeichnet, daß eine aus Metallgewebe bestehende Manschette zwischen der Innenwand (23) des Mantels (21) und dem ersten Rohr (2) angeordnet ist.

4. Solarkollektor, dadurch gekennzeichnet, daß er mit einem Energieübertragungselement nach einem der vorangehenden Ansprüche ausgerüstet ist.

## Claims

1. Element for transfer of solar energy by means of a heat transfer fluid for the purpose of being introduced into the hollow part (25) of a jacket (21) of a sun trap (20) having a section SV and of being connected to a general heat transfer fluid circuit upstream and downstream of the jacket, characterised in that it includes a first tube (2) of section S1 with the purpose of being placed inside said hollow part (25), and, on the one hand, a second tube (4) of section S2 connected upstream to the general heat transfer fluid circuit, itself extending into the interior of the first tube (2), a joining hollow stopper (50) closing the extremity of the first tube (2) and permitting the circulating of heat transfer fluid between the interior of the second tube (4) and the free section (S1 – S2) of the intermediate space between the first and second tube, and, on the other hand, a third tube (8) for the purpose of providing fluid circulation downstream of the element from said free section (S1 – S2) to the general circuit for heat transfer fluid circulation; the second and third tubes (4, 8) presenting each a flattened zone (5, 55) over a length l1 determined so that, when the two tubes (4, 8) are inserted into the first (2), their flattened zones (5, 55) are pressed together for being united the one with the other as well as united with the first tube at its extremity opposite the extremity closed by the stopper (50).

2. Element for transfer of solar energy according to claim 1 characterised in that the section S1 of the first tube (2) is similar to the section SV of the hollow part (25) of the jacket (21) so that there exists only a thin layer of air between the tube and the jacket.

3. Element for transfer of solar energy according to one of the claims 1 and 2, characterised in that a sleeve, formed of metallic mesh, is placed between the interior wall (23) of the jacket (21) and the first tube (2).

4. Sun trap characterised in that it is provided with a transfer element, according to one of the preceding claims.

# FIG_1

# FIG_4

# FIG_2

# FIG_3